# NEUE EUROPÄISCHE PATENTSCHRIFT

(11) **EP 0 189 743 B2**
(45) Veröffentlichungstag und Bekanntmachung des Hinweises auf die Entscheidung über den Einspruch: **06.04.1994**
(45) Hinweis auf die Patenterteilung: 07.12.1988
(21) Anmeldenummer: 86100019.8
(22) Anmeldetag: 02.01.1986
(51) Int. Cl.: A47J 43/25

(54) **Küchengerät zum Schneiden von Gemüse, insbesondere Kartoffeln, in Streifen**
Kitchen utensil for cutting vegetables, in particular potatoes, into ribbons
Ustensile de cuisine pour couper des légumes, notamment des pommes de terre, en bandes

(30) Priorität: 09.01.1985 DE 3500495
(43) Veröffentlichungstag der Anmeldung: 06.08.1986
(62) Teilanmeldung aus: 86110663.1
(73) Patentinhaber: A. Börner GmbH, 54526 Niederkail (DE)
(72) Erfinder: Börner, Alfred, D-5524 Orsfeld (DE)
(74) Vertreter: Goddar, Heinz J., Dr.

(56) Entgegenhaltungen:
- DE-A- 3 009 213
- DE-B- 2 260 358
- DE-C- 195 823
- FR-A- 634 732
- US-A- 1 845 522
- US-A- 2 447 714

## Beschreibung

Die Erfindung betrifft ein Küchengerät nach dem Oberbegriff des Anspruchs 1.

Ein derartiges Küchengerät ist bereits aus der US-A-2447714 bekannt.

Bei dem vorbekannten Küchengerät werden die erzeugten Streifen nicht zuverlässig von der Grundplatte abgeführt. Dies führt alsbald zu einem Verstopfen des Gerätes.

Der Erfindung liegt damit die Aufgabe zugrunde, das vorbekannte Küchengerät derart auszubilden, dass eine Verstopfungsgefahr nicht besteht.

Erfindungsgemäss wird diese Aufgabe durch die im kennzeichnenden Teil des Anspruchs 1 angegebenen Merkmale gelöst.

Die abhängigen Ansprüche geben vorteilhafte Ausgestaltungen des Küchengeräts nach der Erfindung an.

Nachfolgend wird ein Ausführungsbeispiel der Erfindung anhand von Zeichnungen näher erläutert. Dabei zeigt:
Fig. 1 eine perspektivische Gesamtansicht eines ersten Ausführungsbeispieles des erfindungsgemässen Küchengerätes,
Fig. 2 eine vergrösserte Schnittansicht des Küchengerätes entlang der Linie 11-11 aus Fig. 1,
Fig. 3 einen vergrösserten Längsschnitt durch die Messer entlang der Linie 111-111 aus Fig. 1,
Fig. 4 einen vergrösserten Ausschnitt aus der Fig. 3 mit der Kartoffel,

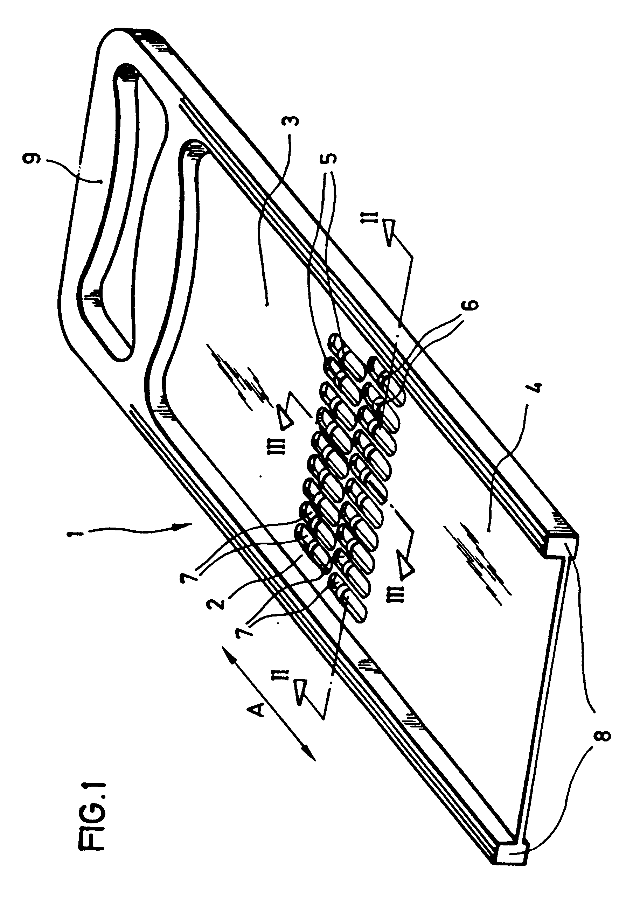

Fig. 1 zeigt das erfindungsgemässe Küchengerät, im folgenden Röstischneider 1, im wesentlichen bestehend aus einer ebenen Grundplatte 2, welche auf ihrer Oberseite zwei Anlaufflächen 3 und 4 aufweist.

Zwischen den Anlaufflächen 3 und 4 sind zwei quer zur Schneidrichtung A ausgerichtete Reihen Messer 5 und 6 angeordnet. Die Messer 5 sind gegenüber den Messern 6 derart versetzt angeordnet, dass sich ein Messer 5 jeweils mittig hinter dem Zwischenraum zwischen zwei Messern 6 befindet. Unterhalb der Messer 5 und 6 ist die Grundplatte 2 mit langlochförmigen Durchbrüchen 7 zum Abführen der Kartoffelstreifen zur Unterseite des Röstischneiders versehen. Die Durchbrüche 7 sind zur Unterseite der Grundplatte 2 hin konusartig verbreitert.

An den beiden Längsseiten der Grundplatte 2 sind jeweils sich in Schneidrichtung erstreckende Führungsstege 8 angebracht, welche an einem in Schneidrichtung gelegenen Ende des Röstischneiders 1 in einem Handgriff 9 enden.

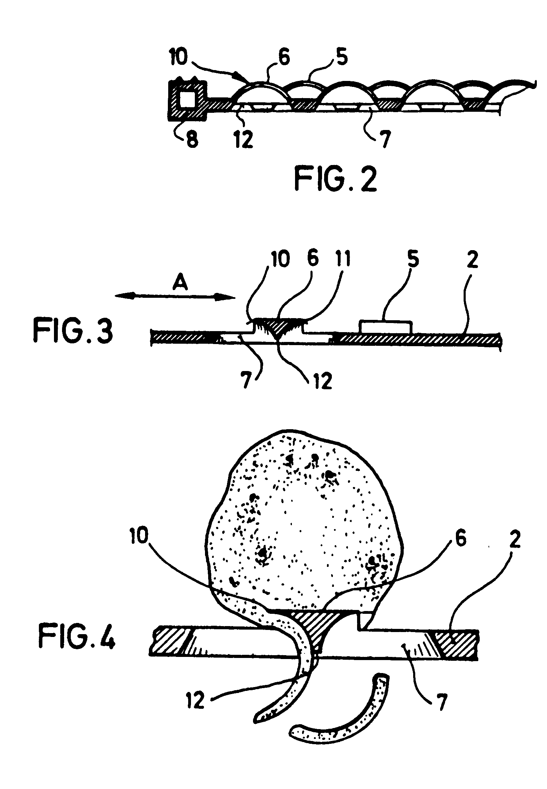

Wie besser aus der Fig. 3 ersichtlich ist, sind die Messer 5 und 6 beidseitig zur Schneidrichtung mit Schneiden 10 und 11 versehen. Die Schneiden 10 und 11 sind dabei parallel zur Schneidrichtung Aausgerichtet. D.h., die Schneidenfront ist zwar quer zur Schneidrichtung A ausgerichtet, jedoch verläuft die Unterseite und die Oberseite des vorderen Bereiches der Schneiden 10 und 11 bis zu einer gewissen Messertiefe parallel zur Schneidrichtung. Für den oberen Teil der Schneiden 10 und 11 bedeutet dies, dass er parallel zur Grundplatte 2 ausgerichtet ist. Die Messer 5 und 6, die jeweils in gleicher Weise aufgebaut sind, neigen sich jeweils von den zur Grundplatte 2 bzw. der Schneidrichtung A parallelen Schneiden 10 und 11 bis zu ihrem Messerende 12 zur Grundplatte 2 hin. Das Messerende 12 weist etwa senkrecht zur Grundplatte 2. Die geneigte Messerunterseite verläuft von den Schneiden 10 bzw. 11 bis zum Messerende 12 konkav gekrümmt, etwa in der Form der Innenseite eines rechtwinkligen Rohrkrümmers. Wie die Fig. 2 zeigt, sind die Schneiden der Messer quer zur Schneidrichtung kreisringsegmentförmig ausgebildet. Die Schneidenbreite in Höhe der Grundplatte beträgt dabei etwa das Vierfache der maximalen Schneidhöhe. Bei dem beschriebenen Ausführungsbeispiel beträgt die Schneidenbreite ca. 8 mm.

Im folgenden wird die Wirkungsweise des Röstischneiders näher erläutert. Der Röstischneider eignet sich in gleicher Weise für rohe wie halbrohe, teilweise sogar gargekochte Kartoffeln. Die zu schneidende Kartoffel wird beispielsweise in einen nicht dargestellten, da bekannten Halter eingesetzt und mit diesem zunächst auf die Anlauffläche 3 aufgesetzt. Die Kartoffel wird dann in Schneidrichtung A über die Messer 5 und 6 hinweggeführt, wobei auf der Unterseite der Kartoffel ein Streifen abgeschnitten wird. Je nachdem, ob die Kartoffel roh, halbroh oder gekocht ist, wird sich dabei der Streifen spanförmig gekrümmt ausbilden (vgl. Fig.4).

Ist die Kartoffel gänzlich über beide Messerreihen geführt und befindet sich auf der Anlauffläche 4, so ist ihre Unterseite wieder nahezu plan. Die Kartoffel wird nun von der Anlauffläche 4 mit mehr oder weniger Schwung gegen die Messer 6 geführt, wobei in bereits dargestellter Weise Streifen aus der Kartoffel herausgeschnitten werden. Dieser Vorgang wird bis zum endgültigen Zerkleinern der Kartoffel wiederholt. Die Führungsstege 8 dienen zur Auflage des nicht dargestellten Halters und sind daher geringfügig höher als die maximale Höhe der Schneiden der Messer 5 und 6 ausgebildet.

Obwohl sich der Röstischneider und insbesondere die Messer auch aus Metall, Blech oder dgl. herstellen lassen, sind sie beim Ausführungsbeispiel einstückig aus einem Kunststoff im Spritzgussverfahren hergestellt.

Entgegen der Darstellung in den Ausführungsbeispielen können die Querreihen der Messer auch leicht schräg zur Schneidrichtung angeordnet werden, wobei aber auch dann die Schneiden parallel zur Schneidrichtung liegen.

## Patentansprüche

1. Küchengerät zum Schneiden von Kartoffeln, insbesondere halbrohen Kartoffeln, in Streifen, mit einer Grundplatte (2), auf deren Oberseite zwei Anlaufflächen (3, 4) und in Schneidrichtung dazwischenliegende, in der Höhe über die Anlaufflächen (3, 4) hinausragende, zur Unterseite der Grundplatte hin offene Messer (5, 6) angeordnet sind, welche in gegeneinander versetzten Querreihen angeordnet und beidseitig zur Schneidrichtung (A) mit U-förmigen Schneiden (10, 11) versehen sind, deren Schneidenfront zur Schneidrichtung in rechtem Winkel verläuft, dadurch gekennzeichnet, daß die Messerunterseiten von der im Anschluß an die Schneidenfront zunächst parallel zur Schneidrichtung verlaufenden Schneide (10, 11) bis zum etwa senkrecht zur Grundplatte (2) weisenden Messerende (12) konkav gekrümmt, etwa in der Form der Innenfläche eines rechtwinkligen Rohrkrümmers, verlaufen.

2. Küchengerät nach Anspruch 1, dadurch gekennzeichnet, dass zwei Messerreihen vorgesehen sind.

3. Küchengerät nach Anspruch 1 oder 2, dadurch gekennzeichnet, dass die Schneide (10 bzw. 11) kreisringsegmentförmig ausgebildet ist.

4. Küchengerät nach mindestens einem der Ansprüche 1 bis 3, dadurch gekennzeichnet, dass das Messerende (12) auf der Unterseite des Messers (5 bzw. 6) von der Ebene der Grundplatte (2) abstehend ausgebildet ist.

5. Küchengerät nach mindestens einem der Ansprüche 1 bis 4, dadurch gekennzeichnet, dass die Schneiden (10,11) als Hohlkehle ausgebildet und spanförmig gebogen sind.

6. Küchengerät nach mindestens einem der Ansprüche 1 bis 5, dadurch gekennzeichnet, dass die Messerdicke jeweils unsymmetrisch zu einer zur Schneidrichtung (A) parallelen Achse verteilt ist.

7. Küchengerät nach mindestens einem der Ansprüche 1 bis 6, dadurch gekennzeichnet, dass in Schneidrichtung (A) gesehen mindestens an einem Ende der Grundplatte (2) ein Handgriff angebracht ist.

8. Küchengerät nach mindestens einem der Ansprüche 1 bis 7, dadurch gekennzeichnet, dass unterhalb der Messer Durchbrüche (7) in der Grundplatte (2) vorgesehen sind, welche sich von der Oberseite der Grundplatte zu deren Unterseite hin konusartig erweitern.

9. Küchengerät nach mindestens einem der Ansprüche 1 bis 8, dadurch gekennzeichnet, dass die Anlaufflächen (3, 4) glatt ausgebildet sind.

10. Küchengerät nach mindestens einem der Ansprüche 1 bis 9, dadurch gekennzeichnet, dass die Messer (5, 6) einstückig mit der Grundplatte (2) verbunden sind.

## Claims

1. A kitchen utensil for cutting potatoes, more particularly half-cooked potatoes, into strips, comprising a baseplate (2), on the top of which there are disposed two stop surfaces (3, 4) and, situated therebetween in the cutting direction, cutters (5, 6) which project heightwise above the stop surfaces (3, 4) and which are open towards the bottom of the baseplate, the said cutters being disposed in mutually offset transverse rows and having, on both sides in relation to the cutting direction (A), U-shaped cutting edges (10, 11), the cutting edge front of which extends at a right angle to the cutting direction, characterised in that the undersides of the cutters extend substantially in the form of the inside surface of a right-angled pipe bend as far as the cutter end (12) extending substantially perpendicularly to the baseplate (2) from the cutting edge (10, 11), which extends initially parallel to the cutting direction after the cutting edge front.

2. A kitchen utensil according to claim 1, characterised in that two rows of cutters are provided.

3. A kitchen utensil according to claim 1 or 2, characterised in that the cutting edge (10 or 11) is formed as a segment of a circular ring.

4. A kitchen utensil according to at least one of claims 1 to 3, characterised in that the cutter end (12) is constructed to project away from the plane of the baseplate (2) on the underside of the cutter (5 or 6).

5. A kitchen utensil according to at least one of claims 1 to 4, characterised in that the cutting edges (10, 11) are constructed as fillets and are curved in the form of a shaving.

6. A kitchen utensil according to at least one of claims 1 to 5, characterised in that the cutter thickness is in each case distributed non-symmetrically in relation to an axis parallel to the cutting direction (A).

7. A kitchen utensil according to at least one of claims 1 to 6, characterised in that a handle is disposed at at least one end of the baseplate (2) as viewed in the cutting direction (A).

8. A kitchen utensil according to at least one of claims 1 to 7, characterised in that apertures (7) are provided in the baseplate (2) beneath the cutters and widen out conically from the top of the baseplate to the underside thereof.

9. A kitchen utensil according to at least one of claims 1 to 8, characterised in that the stop surfaces (3, 4) are smooth.

10. A kitchen utensil according to at least one of claims 1 to 9, characterised in that the cutters (5, 6) are integrally connected to the baseplate 2.

## Revendications

1. Ustensile de cuisine pour couper des pommes de terre, en particulier des pommes de terre à moitié cuites, en lamelles, comprenant une plaque de base (2) sur le côté supérieur de laquelle sont disposées deux surfaces d'appui (3,4) et des lames (5, 6) qui se trouvent entre lesdites surfaces d'appui dans la direction de coupe, dépassent en hauteur au-dessus des surfaces d'appui (3, 4) et sont ouvertes en direction du côté inférieur de la plaque de base, lesquelles lames sont disposées en rangées transversales décalées les unes par rapport aux autres et sont munies de part et d'autre de la direction de coupe (A) de tranchants (10, 11) en forme de U dont la face s'étend à angle droit par rapport à la direction de coupe, caractérisé par le fait que les côtés inférieurs des lames présentent à partir du tranchant (10, 11) s'étendant à la suite de la face de tranchant tout d'abord parallèlement à la direction de coupe, jusqu'à l'extrémité (12) des lames orientée à peu près perpendiculairement à la plaque de base, une courbure concave semblable à celle de la surface inférieure d'un coude de tube à angle droit.

2. Ustensile de cuisine selon la revendication 1, caractérisé par le fait que deux rangées de lames sont prévues.

3. Ustensile de cuisine selon la revendication 1 ou 2, caractérisé par le fait que le tranchant (10 ou 11) est réalisé en forme de segment de cercle.

4. Ustensile de cuisine selon l'une au moins des revendications 1 à 3, caractérisé par le fait que l'extrémité de lame (12) sur le côté inférieur de la lame (5 ou 6) fait saillie du plan de la plaque de base (2).

5. Ustensile de cuisine selon au moins l'une des revendications 1 à 4, caractérisé par le fait que les tranchants (10, 11) sont réalisés sous forme de gorge creuse et sont courbés en forme de copeaux.

6. Ustensile de cuisine selon au moins l'une des revendications 1 à 5, caractérisé par le fait que l'épaisseur des lames est répartie de manière asymétrique par rapport à un axe parallèle à la direction de coupe (A).

7. Ustensile de cuisine selon au moins l'une des revendications 1 à 6, caractérisé par le fait que vu dans la direction de coupe (A), une poignée (9) est prévue au moins à une extrémité de la plaque de base (2).

8. Ustensile de cuisine selon au moins l'une des revendications 1 à 7, caractérisé par le fait que la plaque de base (2) comporte sous les lames des perforations (7) qui s'élargissent en cône du côté supérieur de la plaque de base vers son côté inférieur.

9. Ustensile de cuisine selon au moins l'une des revendications 1 à 8, caractérisé par le fait que les surfaces d'appui (3, 4) sont lisses.

10. Ustensile de cuisine selon au moins l'une des revendications 1 à 9, caractérisé par le fait que les lames (5, 6) sont reliées d'une pièce à la plaque de base (2).
